# EUROPEAN PATENT SPECIFICATION

(11) **EP 0 811 416 B1**
(45) Date of publication and mention of the grant of the patent: **04.04.2001**
(21) Application number: 97107644.3
(22) Date of filing: 09.05.1997
(51) Int. Cl.: B01D 53/52, B01D 53/84

(54) **Desulfuration of gases containing hydrogen sulfide**
Entschwefelung von Schwefelwasserstoff enthaltenden Gasen
Désulfuration des gaz contenant du sulfur d'hydrogène

(30) Priority: 04.06.1996 IT MI961131
(43) Date of publication of application: 10.12.1997
(73) Proprietor: ENITECNOLOGIE S.p.A., 20097 S. Donato Milanese (Milano) (IT)
(72) Inventor: Gianna, Roberto, Roma (IT); Sisto, Raffaello, Roma (IT)
(74) Representative: De Gregori, Antonella

(56) References cited:
- EP-A- 0 220 776
- EP-A- 0 280 750
- DE-A- 3 300 402
- GB-A- 2 191 769
- US-A- 4 400 361
- US-A- 4 760 027
- US-A- 5 508 014

## Description

The present invention relates to a method for the purification of gases containing hydrogen sulfide. Hydrogen sulfide is present, in addition to natural gas, also in the effluents of industrial plants.

There are numerous chemical methods which describe (see for example "Rounding Up Sulfur" in Chemical Engineering, February 1995) the removal of this pollutant.

The most widely-used method, based on the Claus reaction between hydrogen sulfide and sulfur dioxide to give elemental sulfur and water, is used in refineries and involves large investments. Moreover it is not suitable for gaseous streams of a limited degree.

For low production capacities of sulfur, redox technologies in liquid phase are considered more advantageous as described for example in "Gas industry assesses new ways to remove small amounts of H₂S", Oil & Gas Journal of May 23, 1994.

Methods are also known for treating hydrogen sulfide present in gaseous effluents with solutions of ferric sulfate regenerated by oxidation of the ferrous ion with ferro-oxidating bacteria. This method is described in the patent EP 280 750 filed by Dowa Mining Co.

We have now surprisingly discovered a process based on the use of a particular reactor in which there is a biofilm of **Thiobacillus ferroxidans** attached to a solid carrier, which drastically improves the efficiency of the reoxidation of ferrous sulfate to ferric sulfate, used for separating the hydrogen sulfide contained in the gaseous stream to be treated, transforming it to elemental sulfur and water.

In accordance with this, the present invention relates to a process for desulfurating a gaseous fluid containing up to 100% of H₂S, comprising:
a) reactive absorption of H₂S on the part of a solution of ferric sulfate with precipitation of elemental sulfur and reduction of the ferric sulfate to ferrous sulfate;
b) removal of the precipitated sulfur;
c) oxidation of the ferrous sulfate obtained in step (a) to ferric sulfate in a bioreactor containing a solid carrier covered with a biofilm of ferro-oxidating bacteria of the **Thiobacillus** type
   - said reaction being fed from the top by percolation of a liquid stream of ferrous sulfate and fed from the bottom in countercurrent with air or air enriched with CO₂ and/or O₂.

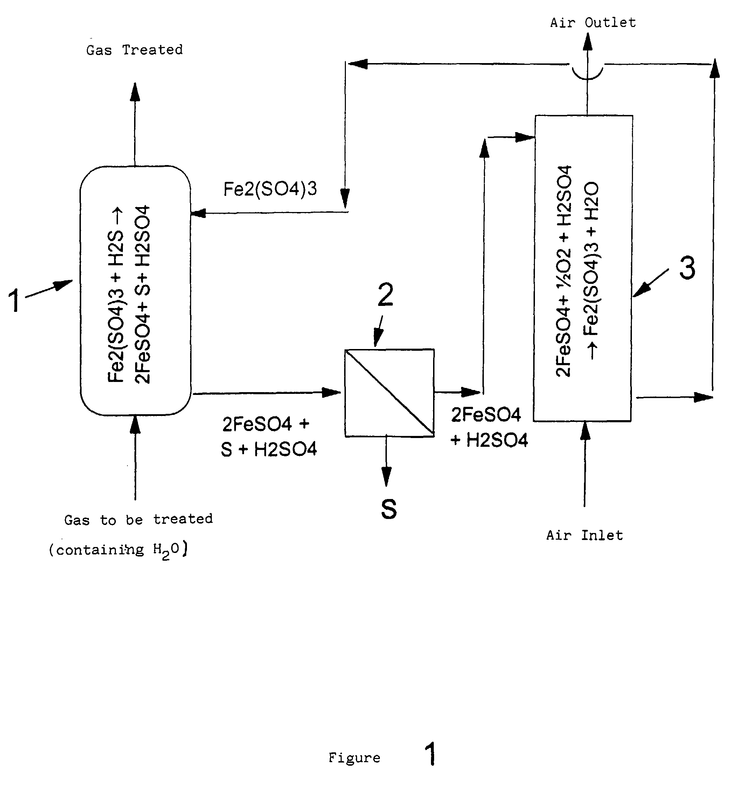

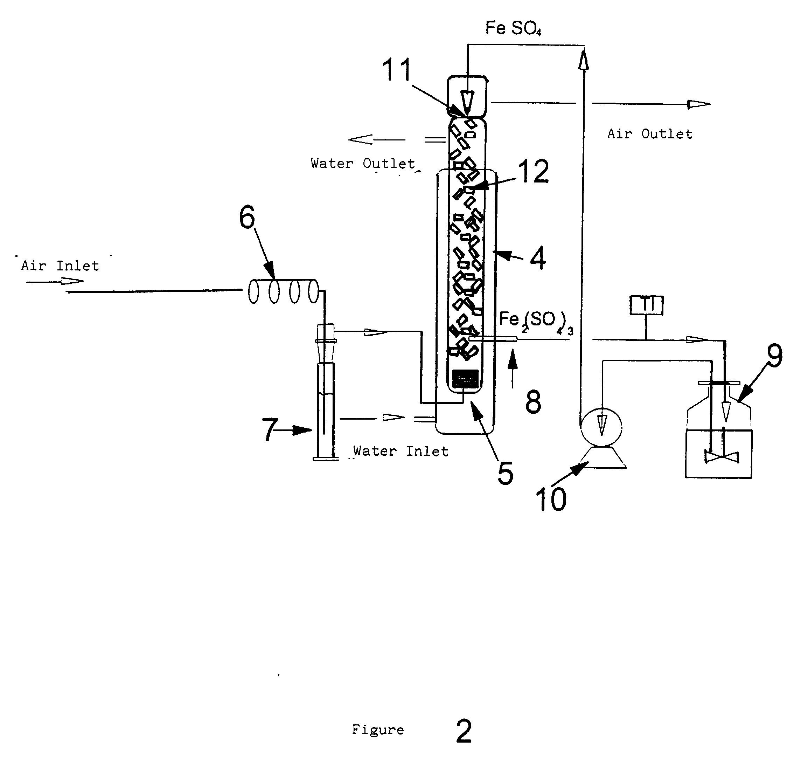

A typical embodiment of the process, according to the present invention, is hereunder described with reference to figures 1 and 2 which respectively illustrate the block diagram of the whole process and the biological reactor. In the figures the same numbers correspond to the same elements.

The gaseous effluent containing hydrogen sulfide is bubbled inside an absorber **1** fed with the solution of ferric sulfate coming from the biological oxidation reactor **3**. The absorber is suitably sized in relation to the content of H₂S and flow of the gaseous stream so that the contact time with the solution of ferric sulfate is sufficient to guarantee a separation of the hydrogen sulfide below the limits allowed for the entry of natural gas into gasducts (4 ppm) or into the atmosphere (5 mg/m³). The liquid stream containing ferrous sulfate, sulfuric acid and the sulfur produced by the reactive absorption, passes through a solid-liquid separator **2** where the sulfur is separated. A press tape or any other type of separator known to experts for separating solids, can be used for the purpose. The liquid stream containing the ferrous sulfate and sulfuric acid, on the other hand, returns to feed the biological oxidation reactor **3**. The biological oxidation reactor consists of a container with plates, disks or septa on the inside for the adhesion of the bacterial flora. The material for the carriers can be selected from those (such as glass, bentonite, zeolites etc.) normally used in microbiology. The strain is selected from bacteria known as ferro-oxidants obtained from pure collection cultures or cultures isolated from ferrous mineral waste (pyrite) or selected from colonies having a high oxidation capacity on mediums containing ferrous sulfate.

The reactor operates in countercurrent regime, feeding the gaseous mixture of oxygen and carbon dioxide from the bottom. The carbon dioxide is the only carbon source for the duplication of the **Thiobacillus**, wherein the oxygen is indispensable for the oxidation of the iron. The liquid stream of the culture medium is fed from the top and after touching the surface of the carrier falls into the collection container so that the biocatalytic carrier does not remain immersed. In this way contact between the microorganisms attached, liquid substrate and gaseous stream is maximized.

In this process, with this particular type of reactor, a productivity is obtained, in terms of grams of ferrous ion oxidated to ferric ion by a litre of biocatalyst per hour, which is significantly higher than that obtained with immersed bioreactors. In fact, the factor which limits the activity of the microrganisms attached to the solid carrier is the diffusion velocity of the O₂ and CO₂ gases from the gaseous phase to the liquid phase and from this to the microorganisms. The diffusion in the percolation reactor is more rapid with respect to cases in which the biomass is completely immersed.

As in these processes the regeneration rate of the iron (III) is the limiting factor, the greater efficiency of the process described in the present invention is evident. In fact to oxidate an equivalent quantity of iron (II) the volume of the percolation bioreactor is signficantly less than the volume required by a reactor operating with immersed biomass.

This process also enables the separation of the hydrogen sulfide content in gaseous effluents below 1-2 ppm vol.

The following examples provide a better illustration of the invention but do not limit its scope.

### EXAMPLE 1

### Preparation of the biological reactor

A strain of **Thiobacillus ferrooxidans NCIMB n. 9490** was used, revitalized in a culture medium consisting of: 0.4 g of K₂HPO₄, 0.4 g of (NH₄)₂SO₄, 0.44 g of MgSO₄7H₂O, 70 g of FeSO₄7H₂O brought to 1 litre with distilled water and at a pH varying from 1.3 to 2.3 with H₂SO₄.

Reactor **3** illustrated in figure 2 consists of a pyrex glass column (internal diameter 3.7 cm, useful height 54 cm) equipped with an external jacket for thermostat-regulation **4**. The column was filled with 150 g of a syntherized glass acid-resistant carrier in the form of hollow cylinders 12, with a high specific surface, which occupies 285 ml. At the bottom of the column a distributor **5** was placed, which ensures a uniform air flow-rate varying from 10 to 250 l/h, fed with an air flow preheated in thermostat **6** and previously humidified by bubbling into a washing bottle for gases **7** containing water. The outlet **8** of the liquid stream was situated at 5 cm from the bottom of the column. The partially oxidated liquid substrate accumulates in the collection tank **9**. The column is fed from the top with the solution of ferrous sulfate, by means of a pump **10**, with a flow-rate varying from 1 to 20 l/h. The liquid culture medium thus fed is uniformly distributed on the carrier by means of an appropriate "shower" feeding system 11. For a uniform colonization of the carrier, 1.8 1 of the above culture medium and 200 ml of a culture containing a number of microorganisms of about 2x10⁺⁸, were prepared. The culture thus prepared is recirculated, with the pump, over the whole surface of the carrier, substituting the exhausted medium every day. After a period of 10-15 days, without any further addition of new culture of microorganisms, there was a biocatalytic carrier uniformly colonized from Thiobacillus.

### EXAMPLE 2

Using the reactor described in example 1 and operating at 30°C, maintaining the air flow constant (90 l/h), the influence of the feeding of the liquid substrate on the productivity of the bioreactor was examined, intended as the quantity, in milligrams of Fe⁻³ produced from a litre of biocatalytic carrier in the time unit (hour).

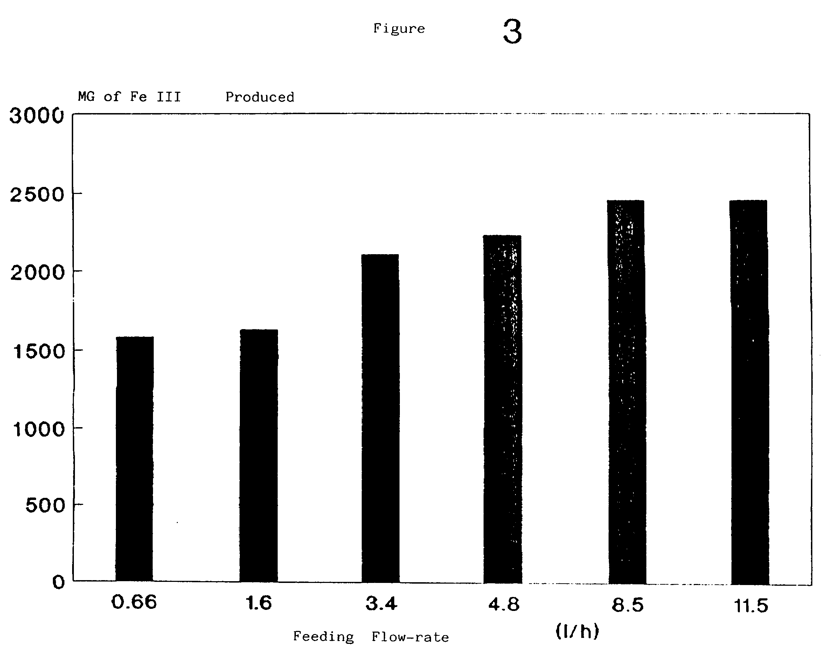

Figure 3 shows the trend of the productivity obtained. From this series of experiments a constant increase in the productivity is registered up to a flow of the liquid stream equal to 8.5 l/h, with a maximum productivity under these conditions of 2500 mg h⁻¹ l⁻¹.

### EXAMPLE 3

Using the same reactor described in example 1, maintaining the feeding flow of the liquid substrate (8.5 l/h) and the operating temperature (30°C) constant, the air flow varied from 90 to 150 l/h.

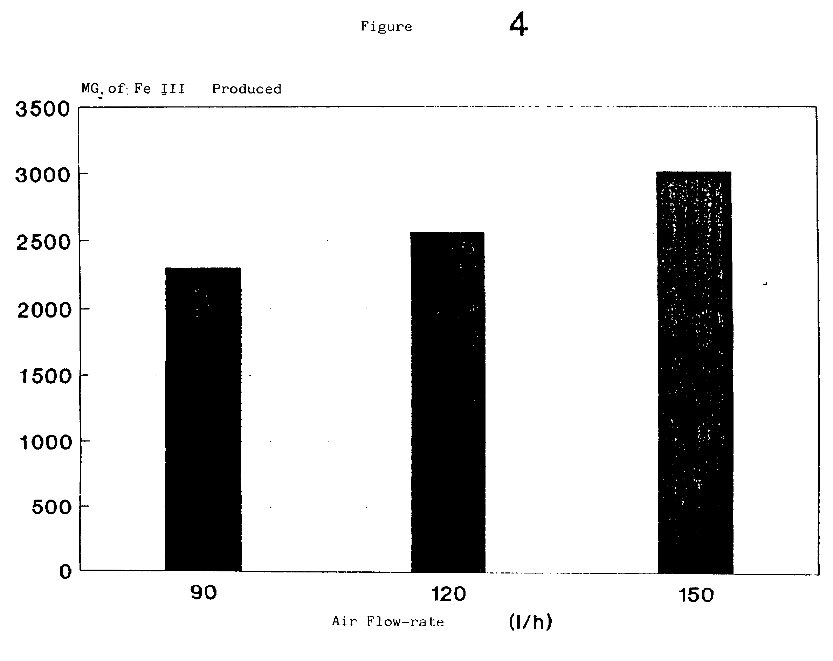

Figure 4 shows the trend of the productivity in relation to the increase in the gaseous flow on the biocatalyst, obtaining a maximum productivity, at 150 l/h of air, of 3100 mg 1⁻¹ h⁻¹ almost double with respect to the best results indicated in the Dowa patent (1720 mg l⁻¹ h⁻¹).

### EXAMPLE 4

Proceeding in the same way as the previous examples, the air flow (150 l/h) and feeding flow (8.5 l/h) were maintained constant, varying the temperature from 25 to 45°C.

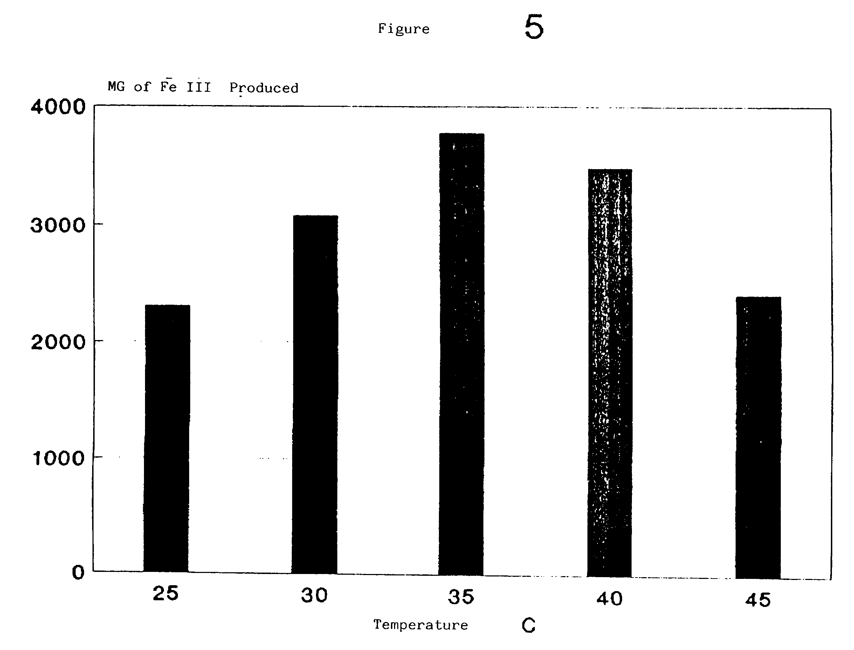

Figure 5 shows the trend of the productivity registered. Under these conditions the optimum productivity is at about 35°C, corresponding to a productivity of 3800 mg h⁻¹l⁻¹, whereas the oxidative capacity of the bioreactor rapidly falls with a further increase in this temperature.

### EXAMPLE 5

Using the same conditions as example 4, the concentration of ferrous sulfate was increased from 0.15 to 0.5 M.

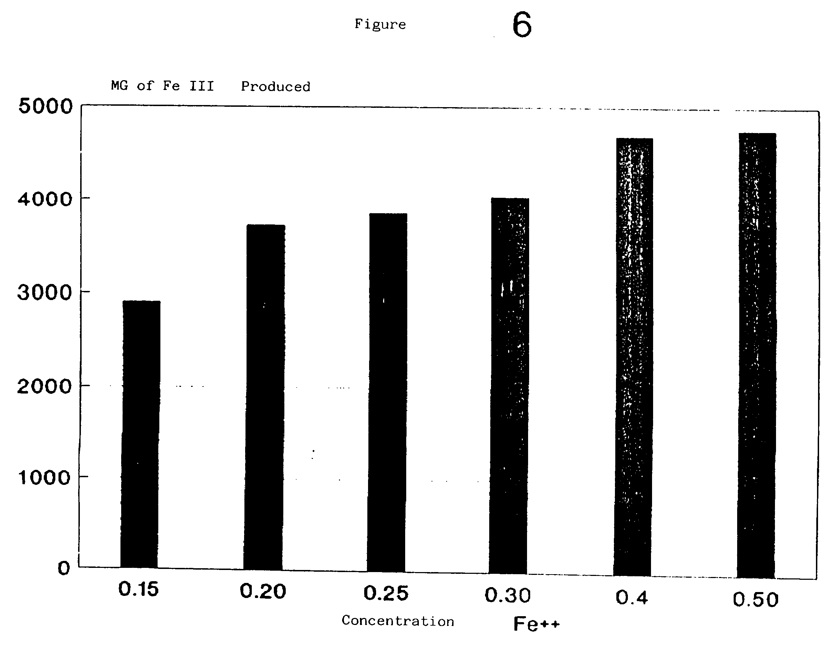

Figure 6 shows the productivity values, recording a constant increase in the oxidative capacity of the biological reactor and obtaining at the maximum concentration of ferrous sulfate a maximum productivity of 4800 mg h⁻¹l⁻¹, practically three times higher than that expressed in the best data declared in the Dowa patent.

### COMPARATIVE EXAMPLE 6

### Reactor operating with immersed biomass.

Using the same apparatus described above and operating under the same conditions as example 5 (35°C and 150 l/h of air flow), the bioreactor was fed from the top with ferrous sulfate 0.5 M at a flow of 8.5 l/h, so that the carrier remained completely immersed. Under these conditions a productivity of 2000 mg h⁻¹ l⁻¹ was registered, which is much lower than that obtained under the same conditions in a reactor with percolation of the substrate (4800 mg l⁻¹ h⁻¹).

### EXAMPLE 7

### Separation of H₂S in diluted streams.

500 ml of solution of Fe₂(SO₄)₃ 0.1 M coming from the biocatalyzed oxidation of Fe²⁺ (example 4) are placed inside a Drechsel bottle equipped with a G3 porous glass diffuser (pore φ 16-40 µ) immersed in the solution at a depth of 20 cm. The Drechsel bottle is immersed in a bath thermostat-regulated at 70°C. A stream with a representative composition of natural gas (H₂S 1%, CO₂ 3%, CH₄ 96% v/v) is bubbled through the diffuser into the solution at a flow of 100 cm³ per minute measured under standard conditions of temperature and pressure (sccm). The concentration of H₂S leaving the absorber is continuously measured with a Varian 3400 gaschromatograph, equipped with a Supelco Cromosil 310 column and a Flame Photometric Detector for the determination of the sulfurated compounds. After 5 hours, during which the hydrogen sulfide in the outgoing stream is separated below 2 ppmv (the maximum concentration permitted in a gasduct is 4 ppmv), the bubbling of the gas is interrupted and the sulfur produced is recovered by decanting and filtration. The solution containing Fe²⁺ 54 mM and Fe³⁺ 146 mM, is sent to the biological reactor for biocatalyzed regeneration.

### EXAMPLE 8

### Separation of H₂S in concentrated streams.

1500 ml of solution of Fe₂(SO₄)₃ 0.1 M coming from the biocatalyzed oxidation (example 4) of Fe²⁺ are placed inside three Drechsel bottles, the same as those described in example 6, connected in series and immersed in a bath thermostat-regulated at 70°C. A stream with a representative composition of the gas leaving treatment with amines of natural gas (H₂S 30%, CO₂ 70% v/v) is bubbled through the diffuser of the first into the solution at a flow of 100 cm³ sccm. The concentration of H₂S is continuously measured at the outlet of the third absorber by means of the analytic system described in example 7. After 20 minutes, during which the hydrogen sulfide in the outgoing stream is separated below 1 ppmv (the maximum concentration of H₂S permitted by law for the discharge of gas into the atmosphere is 5 mg/m³ equal to about 3 ppmv), the bubbling of the gas is interrupted: in the first bottle the concentration of Fe³⁺ has dropped from 200 mM to 105 mM, in the second from 200 mM to 186 mM whereas in the third the decrease in [Fe³⁺] is negligible. The solution contained in the first bottle is freed of the sulfur produced as in example 7 and returned to the biocatalyzed oxidation. The second bottle takes the place of the first, the third of the second and at the end of the series a new Drechsel bottle containing the solution of Fe³⁺ 200 mM coming from the biocatalyzed oxidation is added. The mixture of H₂S/CO₂ 30/70 v/v is bubbled into the series of three absorbers for a further 20 minutes again obtaining a gas at the outlet with a concentration of hydrogen sulfide of less than 1 ppmv. The solution of the first bottle, after removal of the sulfur, is sent to the biological oxidation, the second bottle takes the place of the first in the series of absorbers, the third takes the place of the second and a new Drechsel bottle with the solution coming from the oxidation, is added. In this way the treatment of the stream containing H₂S is maintained until all the hydrogen sulfide has been disposed of.

### EXAMPLE 9

### Separation of concentrated streams.

2000 ml of a solution of Fe₂(SO₄)₃ 0.1 M, coming from the biocatalyzed oxidation (example 4) of Fe⁺², are placed inside a glass column equipped with an interspace for the thermoregulation in which water circulates at 70°C. Inside the column there is a G3 porous glass diffuser (pore diameter 16-40 microns) immersed in the solution at a depth of 54 cm. A stream of the same composition as example 8 (H₂S 30%, CO₂ 70% v/v) is bubbled through the diffuser at a flow of 100 sccm. The content of hydrogen sulfide in the outgoing stream, continuously measured with the analytic system described in example 7, is maintained below 2 ppm for 80 minutes. The bubbling of the gaseous mixture at this point is interrupted and the sulfur produced recovered by decanting and filtration. The solution, containing 70 mM of Fe⁺² and 130 mM of Fe⁺³ is sent to the biological reactor for biocatalyzed regeneration.

## Claims

1. A process for desulfurating a gaseous fluid containing H₂S, comprising:
a) reactive absorption of H₂S by means of a solution of ferric sulfate with precipitation of elemental sulfur and reduction of the ferric sulfate to ferrous sulfate;
b) removal of the precipitated sulfur;
c) oxidation of the ferrous sulfate obtained in step (a) to ferric sulfate in a bioreactor containing a solid carrier covered with a biofilm of ferro-oxidating bacteria of the **Thiobacillus** type
- said reaction being fed from the top by percolation of a liquid stream of ferrous sulfate and fed from the bottom in countercurrent with air or air enriched with CO₂ and/or O₂.

## Patentansprüche

1. Verfahren zur Entschwefelung eines H₂S enthaltenden, gasförmigen Fluids, umfassend:
a) die reaktive Absorption von H₂S durch eine Eisen(III)-Sulfatlösung unter Ausscheidung von elementarem Schwefel und Reduktion von Eisen(III)- zu Eisen(II)-Sulfat;
b) die Entfernung des ausgefallenen Schwefels;
c) die Oxidation des in Schritt a) erhaltenen Eisen(II)-Sulfats in einem Bioreaktor, der einen festen, mit einem Biofilm aus ferrooxidierenden Bakterien des Thiobacillustyps bedeckten Träger enthält, zu Eisen(III)-Sulfat, wobei die Reaktion von oben durch Perkolieren eines Flüssigkeitsstroms von Eisen(II)-Sulfat, und von unten mit einem Gegenstrom von Luft oder von mit CO₂ und/oder O₂ angereicherter Luft, beschickt wird.

## Revendications

1. Procédé pour la désulfuration d'un fluide gazeux contenant H₂S, comprenant :
a) l'absorption réactive de H₂S au moyen d'une solution de sulfate ferrique avec précipitation de soufre élémentaire et réduction du sulfate ferrique en sulfate ferreux;
b) extraction du soufre précipité;
c) oxydation du sulfate ferreux obtenu à l'étape (a) en sulfate ferrique dans un bioréacteur contenant un porteur solide recouvert d'un biofilm de bactéries ferro - oxydantes du type Thiobacillus - ladite réaction étant alimentée par le dessus par percolation d'un courant liquide de sulfate ferreux et alimentée par le dessous en contre - courant avec de l'air ou de l'air enrichi de CO₂ et / ou O₂.
